# EUROPEAN PATENT SPECIFICATION

(11) **EP 2 659 656 B1**
(45) Date of publication and mention of the grant of the patent: **18.07.2018**
(21) Application number: 11811348.9
(22) Date of filing: 23.12.2011
(51) Int. Cl.: H04N 21/233, H04M 1/253, H04N 21/442, H04N 7/14, H04L 29/06, H04N 21/6379

(54) **DYNAMICAL ADAPTATION OF DATA ENCODING DEPENDENT ON CPU LOAD**
DYNAMISCHE ANPASSUNG VON DATENCODIERUNG ABHÄNIG DER CPU-LAST
CODAGE DYNAMIQUEMENT ADAPTATIVE DÉPENDANTES DE LA CHARGE D'UNE UNITE CENTRALE

(30) Priority: 29.12.2010 US 201061427986 P
(43) Date of publication of application: 06.11.2013
(73) Proprietor: Skype, Dublin 2 (IE)
(72) Inventor: ASTROM, Henrik, S-16973 Solna (SE); SORENSEN, Karsten, S-12066 Stockholm (SE); VOS, Koen, San Francisco California 94116 (US)
(74) Representative: Driver, Virginia Rozanne
(86) International application number: PCT/EP2011/073972
(87) International publication number: WO 2012/089671

(56) References cited:
- EP-A2- 1 503 595
- US-A1- 2004 001 545
- US-B1- 6 535 238

## Description

### Field of the Invention

The present invention relates to processing audio data for use in a communication session.

### Background

Communication systems exist which allow users of the communication system to communicate with each other over a network. Each user can communicate in the communication system using a user terminal. Data can be sent between user terminals over the network to thereby facilitate a communication session between users of the communication system.

A user terminal may comprise a microphone for receiving audio data for use in a communications session. The audio data may be speech data from a user, or any other type of audio data which is to be transmitted in the communication session. The audio data received at the microphone is an analogue signal. The analogue signal can be converted into a digital signal by an analogue to digital converter in the user terminal. An analogue to digital converter samples the analogue audio data at regular time intervals (at a sampling frequency fₛ). The sampled audio data can then be quantized, such that the samples are assigned a binary number approximating their sampled value. In this way the audio data can be represented as a digital signal. The digital signal may then be encoded and packetised before being transmitted over the network to another user terminal engaging in a communication session. In this way the user terminal can receive audio data, sample the audio data and transmit the sampled audio data over the communication system as part of a communication session. The processing operations performed on the received audio data may be performed by an audio codec at the user terminal.

The sampling frequency with which the audio codec samples the audio data may be set, for example either when an application for communicating over the communication system starts up at the user terminal or when a communication session (e.g. a call) is initialized.

US 2004/0001545 discloses video encoding techniques wherein a computational budget for the encoding of a video frame is determined, and the video frame is selectively encoded using different encoding modes based on the determined computational budget. If the determined computational budget does not exceed a threshold, encoding of the video frame may be performed in a first encoding mode using motion estimation techniques. If the determined computational budget exceeds the threshold, motion estimation can be discontinued in favour of a second mode that using of less computationally intensive encoding techniques.

EP 1503595 discloses a video conferencing system comprising an encoder and a decoder. The encoder/decoder is able to dynamically adapt its algorithms according to the available computational resources. Each device is configured to automatically change its settings at which a coding/decoding algorithm applied to incoming/outgoing video data operates according to available computational resources in response to complexity measurements performed at run-time.

US 6,535,238 discloses techniques for controlling the resource usage of a processor during a video conference by dynamically varying the rate at which video images are compressed (video frame rate) so as to maintain a target threshold of processor resource usage. The system first checks that the current processor resource utilisation is below a specified target threshold prior to compressing a video image. If the processor resource utilisation is below the target threshold, the image is compressed; otherwise the image is skipped to conserve processor resources.

### Summary

According to a first aspect of the invention there is provided a method of processing audio data for transmission over a network in a communication session between a first user terminal and a second user terminal, the method comprising: transmitting samples of audio data which have a sampling frequency and which provide a digital representation of an analogue audio signal from the first user terminal to the second user terminal in the communication session; during the communication session, repeatedly determining an estimate of processing resources available for processing audio data in the communication session; and dynamically adjusting the sampling frequency during the communication session based on the determined estimate of available processing resources.

The method may further comprise sampling the analogue audio signal at the first user terminal during the communication session to thereby generate said samples of audio data for transmission to the second user terminal. Alternatively, the method may further comprise accessing an audio data file at the first user terminal to thereby retrieve said samples of audio data for transmission to the second user terminal.

The step of sampling an analogue audio signal may comprise sampling the analogue audio signal at the sampling frequency. In that case, the step of dynamically adjusting the sampling frequency may comprise adjusting the frequency at which the analogue audio signal is sampled.

Alternatively, the step of sampling an analogue audio signal may comprise: sampling the analogue audio signal at an initial sampling frequency to generate intermediate samples of audio data having the initial sampling frequency; and resampling the intermediate samples of audio data, thereby applying an adjustment to the initial sampling frequency of the audio data to thereby generate said samples of audio data at the sampling frequency. In that case the step of dynamically adjusting the sampling frequency may comprise adjusting the initial sampling frequency at which the analogue audio signal is sampled and/or adjusting the adjustment applied in the resampling step.

The processing resources may comprise processing resources at the first user terminal. Additionally or alternatively, the processing resources may comprise processing resources at a node (e.g. the second user terminal or a network server), other than the first user terminal, which processes audio data in the communication session, and in that case the step of determining an estimate may comprise receiving, at the first user terminal from the node, a sample frequency adjustment request based on an estimation of the processing resources available at the node.

Preferably, the sampling frequency is increased when the determined estimate of available processing resources increases, and the sampling frequency is decreased when the determined estimate of available processing resources decreases.

In preferred embodiments, the step of estimating the processing resources available at the first user terminal is repeated with a frequency which is high enough that the latest estimate of the processing resources available at the first user terminal is an accurate estimate of the current processing resources available at the first user terminal throughout the communication session. In this way the method can be thought of as continuously estimating the available CPU resources during a communication session (e.g. a call).

The communication session may be an audio communication session in which audio data, but no video data, is transmitted between user terminals. Alternatively, the communication session may be a multimedia communication session involving the transmission of audio data and video data between user terminals. The communication session may be a call between at least two users in the communication system. Alternatively, the communication session may be a call from one user to a voicemail service of another user in the communication system. The audio data may be speech data.

According to a second aspect of the invention there is provided a user terminal for processing audio data for transmission over a network in a communication session between the user terminal and a further user terminal, the user terminal comprising: transmitting means for transmitting samples of audio data which have a sampling frequency and which provide a digital representation of an analogue audio signal to the further user terminal in the communication session; determining means for repeatedly determining, during the communication session, an estimate of processing resources available for processing audio data in the communication session; and adjusting means for dynamically adjusting the sampling frequency during the communication session based on the determined estimate of available processing resources.

According to a third aspect of the invention there is provided a communication system comprising: a user terminal according to the second aspect of the invention; and the further user terminal.

According to a fourth aspect of the invention there is provided a computer program product comprising computer readable instructions for execution by computer processing means at a first user terminal for processing audio data for transmission over a network in a communication session between the first user terminal and a second user terminal, the instructions comprising instructions for: transmitting samples of audio data which have a sampling frequency and which provide a digital representation of an analogue audio signal from the first user terminal to the second user terminal in the communication session; during the communication session, repeatedly determining an estimate of processing resources available for processing audio data in the communication session; and dynamically adjusting the sampling frequency during the communication session based on said determined estimate of available processing resources.

Speech and audio codecs can code the audio data making up an audio signal at different sampling frequencies, and it is possible to adjust the sampling frequency (also known as the "sampling rate") without interrupting the signal flow. In other words, the sampling rate can be dynamically adjusted during a call, or other communication session. Increasing the sampling rate improves the perceived quality of the audio signal but also increases the consumption of CPU resources. The user's perception of the quality of a communication session may depend upon the sampling frequency which is used by the audio codec. Setting a relatively high sampling frequency will result in a relatively high perceived quality of the audio signal but also will also result in a relatively high consumption of CPU resources which may lead to CPU overload, which in the worst cases can cause some parts of the audio signal to be lost. On the contrary, selecting a relatively low sampling frequency will result in a relatively low perceived quality of the audio signal, but will result in a relatively low likelihood of a CPU overload occurring.

The sampling frequency may be set when an application for communicating over the communication system starts up at the user terminal or when a communication session (e.g. a call is initialized and may depend upon an estimate of the available processing resources ("CPU resources) at the user terminal at the time of setting the sampling frequency. The inventors have realised that the amount of available CPU resources is not always known at the moment that the audio codec is initialized at the start of a communication session. For example, the clock frequency of modern CPUs is often dynamically adjusted based on the CPU load. This may result in an underestimation of available CPU resources when estimated at the moment of codec initialization when the CPU clock frequency is relatively low. Such an underestimation of the available CPU resources may lead to the implementation of a lower sampling frequency than necessary, thus lowering the perceived audio quality of the sampled audio data.

The inventors have identified another reason why the available CPU resources may not be known at the start of a call and that is that the CPU is often shared between multiple tasks or processes. These tasks or processes may start or stop, or change their CPU consumption during the call. This can lead to either underestimation or overestimation of the CPU resources available for use in the communication session. Overestimation of the available CPU resources may lead to the implementation of a higher sampling frequency than necessary, which in turn may lead to CPU overload at the user terminal. In the worst cases, CPU overload causes some parts of the audio signal to be lost.

The inventors have therefore realised that it can be beneficial to dynamically adjust the sampling frequency of a speech or audio codec based on the available CPU resources. The problems described above can be solved, or at least alleviated, by repeatedly estimating the available CPU resources during a communication session, and, based on those estimations, dynamically adjusting the sampling frequency of the samples of audio data. The adjustment of the sampling frequency may be based on the available CPU resources at the sending user terminal. Additionally, or alternatively, the adjustment of the sampling frequency may be based on the available CPU resources at the receiving user terminal, or at a server node in the communication session.

Dynamically adjusting the sampling frequency creates a wider range of consumption levels for processing resources than is possible with a fixed sampling frequency. This flexibility can be used to dynamically maximize the perceived quality under the available CPU resources. Alternatively, this flexibility can be used to dynamically maximize the user experience combined over a number of simultaneous processes running on the CPU.

The analogue audio signal may be resampled after an initial sampling stage, before being transmitted from the user terminal. The sampling frequency of the audio data which is transmitted from the user terminal may be adjusted by adjusting the sampling frequency of the initial sampling and/or by adjusting the adjustment made to the sampling frequency in the resampling stage. For example, the analogue audio signal may be sampled by an analogue to digital converter, and then may also be sampled by a resampler before being encoded. The sampling frequency of the samples of audio data which are passed to the encoder may be dynamically adjusted by adjusting the operation of one or both of the analogue to digital converter and the resampler based on the determined estimate of available processing resources.

In this specification, the term "available CPU resources" is intended to be interpreted as meaning the processing resources available at the user terminal (or other node as the case may be) for use in processing audio data associated with a communication session.

### Brief Description of the Drawings

For a better understanding of the present invention and to show how the same may be put into effect, reference will now be made, by way of example, to the following drawings in which:
Figure 1 shows a communication system according to a preferred embodiment;
Figure 2 shows a schematic diagram of a user terminal according to a preferred embodiment;
Figure 3a shows a functional block diagram of a user terminal for use in transmitting data packets according to one embodiment;
Figure 3b shows a functional block diagram of a user terminal for use in transmitting data packets according to another embodiment;
Figure 4a shows a functional block diagram of a user terminal for use in receiving data packets according to one embodiment;
Figure 4b shows a functional block diagram of a user terminal for use in receiving data packets according to another embodiment;
Figure 5 is a flow chart for a process of transmitting audio data over a communication system according to a preferred embodiment; and
Figure 6 is a flow chart for a process of dynamically adjusting the sampling frequency used in a communication session according to a preferred embodiment.

### Detailed Description of Preferred Embodiments

Preferred embodiments of the invention will now be described by way of example only.

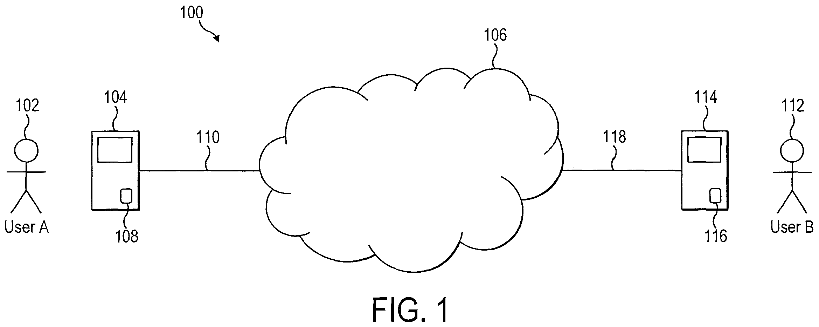

Reference is first made to Figure 1, which illustrates a packet-based communication system 100 of a preferred embodiment. A first user of the communication system (User A 102) operates a user terminal 104, The user terminal 104 may be, for example, a mobile phone, a personal digital assistant ("PDA"), a personal computer ("PC") (including, for example, Windows™, Mac OS™ and Linux™ PCs), a gaming device or other embedded device able to communicate over the communication system 100. The user terminal 104 is arranged to receive information from and output information to the user 102 of the device. In a preferred embodiment the user terminal 104 comprises a display such as a screen and an input device such as a keypad, joystick, touch-screen, keyboard, mouse and/or microphone.

The user terminal 104 is configured to execute a communication client 108, provided by a software provider associated with the communication system 100. The communication client 108 is a software program executed on a local processor in the user terminal 104 which allows the user terminal 104 to engage in calls and other communication sessions (e.g. instant messaging communication sessions) over the communication system 100. The user terminal 104 can communicate over the communication system 100 via a network 106, which may be, for example, the Internet. The user terminal 104 can transmit data to, and receive data from, the network 106 over the link 110.

Figure 1 also shows a second user 112 (User B) who has a user terminal 114 which executes a client 116 in order to communicate over the communication network 106 in the same way that the user terminal 104 executes the client 108 to communicate over the communications network 106 in the communication system 100. The user terminal 114 can transmit data to, and receive data from, the network 106 over the link 118. Therefore users A and B (102 and 112) can communicate with each other over the communications network 106. There may be more users in the communication system 100, but for clarity only the two users 102 and 112 are shown in the communication system 100 in Figure 1.

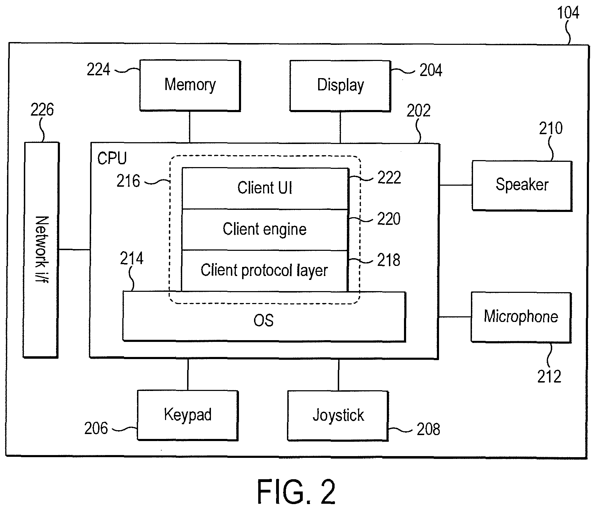

Figure 2 illustrates a detailed view of the user terminal 104 on which is executed client 108. The user terminal 104 comprises a central processing unit ("CPU") 202, to which is connected a display 204 such as a screen, input devices such as a keyboard (or a keypad) 206 and a pointing device such as a mouse (or joystick) 208. The display 204 may comprise a touch screen for inputting data to the CPU 202. An output audio device 210 (e.g. a speaker) and an input audio device 212 (e.g. a microphone) are connected to the CPU 202. The display 204, keyboard 206, mouse 208, output audio device 210 and input audio device 212 are integrated into the user terminal 104. In alternative user terminals one or more of the display 204, the keyboard 206, the mouse 208, the output audio device 210 and the input audio device 212 may not be integrated into the user terminal 104 and may be connected to the CPU 202 via respective interfaces. One example of such an interface is a USB interface. The CPU 202 is connected to a network interface 226 such as a modem for communication with the network 106 for communicating over the communication system 100. The network interface 226 may be integrated into the user terminal 104 as shown in Figure 2. In alternative user terminals the network interface 226 is not integrated into the user terminal 104.

Figure 2 also illustrates an operating system ("OS") 214 executed on the CPU 202. Running on top of the OS 214 is a software stack 216 for the client 108. The software stack shows a client protocol layer 218, a client engine layer 220 and a client user interface layer ("Ul") 222. Each layer is responsible for specific functions. Because each layer usually communicates with two other layers, they are regarded as being arranged in a stack as shown in Figure 2. The operating system 214 manages the hardware resources of the computer and handles data being transmitted to and from the network via the network interface 226. The client protocol layer 218 of the client software communicates with the operating system 214 and manages the connections over the communication system 100. Processes requiring higher level processing are passed to the client engine layer 220. The client engine 220 also communicates with the client user interface layer 222. The client engine 220 may be arranged to control the client user interface layer 222 to present information to the user via a user interface of the client and to receive information from the user via the user interface.

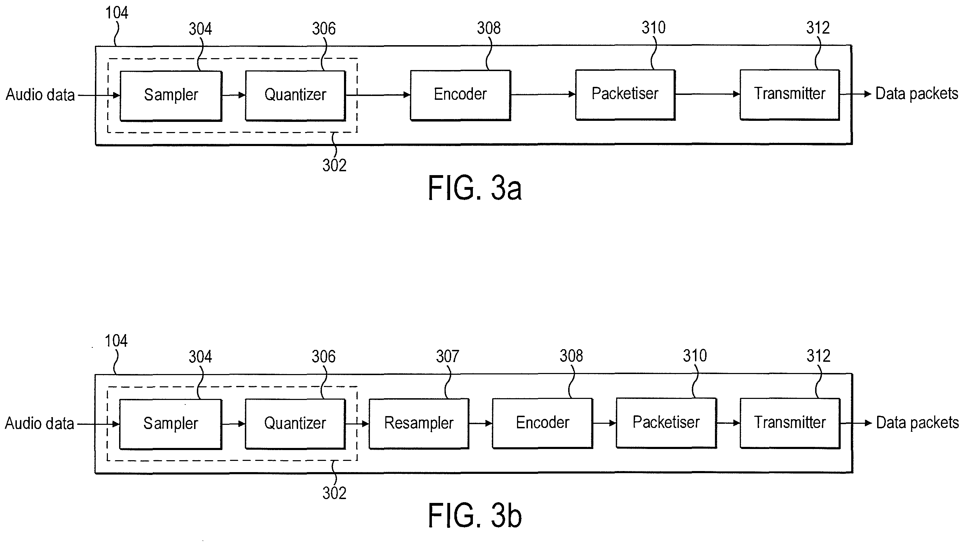

Preferred embodiments of the operation of the user terminal 104 when participating in a communication session with the user terminal 114 over the communication system 100 will now be described with reference to Figures 3a to 6.

Figure 3a shows a functional block diagram of the user terminal 104 for use in transmitting data packets according to a preferred embodiment. The user terminal 104 comprises an analogue to digital converter block 302 which comprises a sampler block 304 for receiving an analogue audio signal and a quantizer block 306. An output of the sampler block 304 is coupled to an input of the quantizer block 306. The user terminal 104 further comprises an encoder block 308, a packetiser block 310 and a transmitter block 312. An output of the sampler block 304 is coupled to an input of the quantizer block 306. An output of the quantizer block 306 is coupled to an input of the encoder block 308. An output of the encoder block 308 is coupled to an input of the packetiser block 310. An output of the packetiser block 310 is coupled to an input of the transmitter block 312. The transmitter block is configured to transmit data packets from the user terminal 104 to the network 106, e.g. for transmission to the user terminal 114 as part of a communication session between the users 102 and 112. The sampler block 304 is configured to receive audio data, for example via the microphone 212 of the user terminal 104. In some embodiments, the analogue to digital converter block 302 is part of the microphone 212. In other embodiments, the microphone 212 is separate from the analogue to digital converter block 302. The received audio data may comprise speech data from the user 102 and/or other audio data picked up by the microphone 212.

The analogue to digital converter (ADC) block 302 is implemented in hardware. Analogue signals in general are manipulated in hardware, and the role of the ADC block 302 is to convert them to the digital domain where they can be manipulated by software (or firmware). The functional blocks 308 to 312 shown in Figure 3 may be implemented in software for execution on the CPU 202, in hardware at the user terminal 104 or in firmware at the user terminal 104. This is an implementation choice for a skilled person when putting embodiments of the invention into effect. Furthermore, in some embodiments, some or all, of the functional blocks 302 to 312 are implemented in an audio codec at the user terminal 104.

In another embodiment, as shown in Figure 3b, there is an additional module in between the ADC block 302 and the encoder block 308, namely a resampler block 307. The resampler block 307 converts the sampling rate of the audio signal output from the ADC block 302, and is typically implemented in software but may be implemented in hardware. The use of the resampler block 307 allows the encoder block 308 to encode the audio data at a different rate to the sampling rate used by the sampler block 304. In some embodiments the resampler block 307 is included in the encoder block 308, in which case there is no need for a separate resampler block as shown in figure 3b.

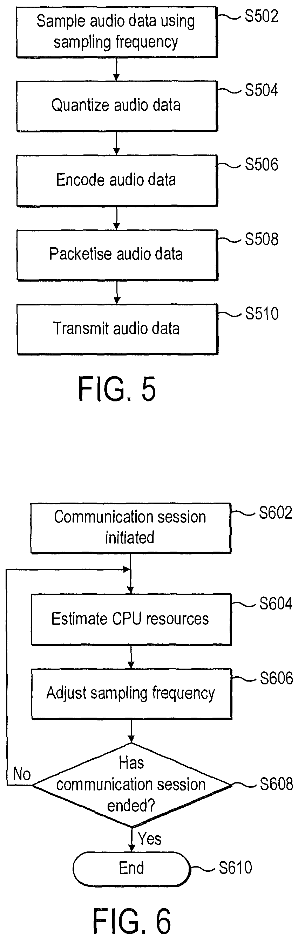

With reference to Figure 5 there is now described a process of transmitting audio data over the communication system 100 according to a preferred embodiment. In step S502 an analogue audio signal is received at the sampler block 304 (e.g. via the microphone 212) and the audio signal is sampled at the sampler block 304 using a sampling frequency, fₛ to generate discrete samples of audio data at the sampling frequency fₛ which provide a digital representation of the analogue audio signal. As stated above, the audio data is received at the sampler block 304 as an analogue signal. The sampling process reduces the continuous analogue signal to a discrete signal by measuring the amplitude of the analogue audio signal at periodic intervals, T, i.e. at a sampling frequency fₛ, where *fₛ* = 1/*T*. The accuracy with which the sampled data represents the original audio data depends on the sampling frequency. As is known to people skilled in the art, according to the Nyquist-Shannon sampling theorem, in order to reconstruct all of the data in the original analogue audio signal, the sampling frequency would need to be at least twice (preferably more than twice) the highest audio frequency being sampled in the audio signal.

When a communication session is initiated involving the user terminal 104, or when the audio codec is initiated, the sampling frequency used by the sampler block 304 is set. The value for the sampling frequency may be set in dependence upon an estimate of the available CPU resources at the user terminal 104 when the communication session, or audio codec, is initiated. When there is a relatively large amount of CPU resources available at the user terminal 104 for use in processing data associated with a communication session over the communication system 100, the sampling frequency is set to a relatively high value. This allows the quality of the sampled audio data (i.e. how well it represents the received analogue audio data) to be relatively high. However, when there is a relatively small amount of CPU resources available at the user terminal 104 for use in processing data associated with a communication session over the communication system 100, the sampling frequency is set to a relatively low value. This reduces the likelihood of a CPU overload occurring during the communication session, which is beneficial since such CPU overloads may lead to a loss of audio data.

In the embodiment shown in Figure 3b in which there is a resampler block 307 which resamples the audio data before the encoder block 308 encodes the audio data, then the sampling frequency of the audio data can be adjusted by the resampler block 307.
The sampling frequency may also be set in dependence upon other factors, such as the available network bandwidth with which the user terminal 104 can transmit data over the network 106 to the user terminal 114. As an example, setting the sampling frequency to a relatively high value will result in a relatively high network bandwidth being required for transmitting the audio data over the network 106 from the user terminal 104 to the user terminal 114. Whereas, setting the sampling frequency to a relatively low value will result in a relatively low network bandwidth being required for transmitting the audio data over the network 106 from the user terminal 104 to the user terminal 114. Therefore setting the sampling frequency in dependence upon the available network bandwidth provides a mechanism to prevent exceeding the available network bandwidth.

In step S504 the sampled audio data is sent from the sampler block 304 to the quantizer block 306 and the audio data is quantized by the quantizer block 306. In order to quantize the samples of audio data, each sample is assigned a binary number approximating its sampled value. Quantizing divides up the sampled voltage range into 2*ⁿ*-1 quantizing intervals, where "*n*" is the number of bits per sample (the sampling resolution). For example, an 8-bit system can identify 2⁸ (256) discrete sampled signal values (255 quantizing intervals).

The output of the quantizer block 306 is a digital signal which represents the analogue audio signal received at the sampler block 304, and which has *fₛ* samples per second (where *fₛ* is the sampling frequency) with the value of each sample being represented by *n* bits. The audio data output from the quantizer block 306 is received at the encoder block 308. Note that in the embodiment shown in Figure 3b which includes the resampler block 307, the resampler block 307 is positioned between the quantizer block 306 and the encoder block 308. In that case the audio data output from the quantizer block 306 is received at the resampler block 307, which resamples the audio data to create an audio data stream with an adjusted sampling frequency which is then input to the encoder block 308, as described above.

In step S506 the samples of audio data are encoded in the encoder block 308. The encoding applied by the encoder block 308 may depend upon the type of the audio data. For example, where the audio data is speech data from the user 102, the encoder block 308 may encode the audio data using a speech encoding algorithm, as is known in the art. Other types of audio data, e.g. background noise or music may be encoded differently to speech data.

The encoded audio data is sent from the encoder block 308 to the packetiser block 310. In step S508 the audio data is packetised into data packets for transmission over the network 106. The packetisation process implemented by the packetiser block 310 may be dependent upon the type of network 106. For example, where the network 106 is the internet, the packetiser block 310 would packetise the audio data into data packets in accordance with a protocol which is suitable for transmission over the internet. Similarly, where the network 106 is a mobile telecommunications network, the packetiser block 310 would packetise the audio data into data packets in accordance with a protocol which is suitable for transmission over the mobile telecommunications network.

The data packets that are output from the packetiser block 310 are received at the transmitter block 312. In step S510 the data packets are transmitted from the transmitter block 312 over the network 106 to the user terminal 114. The transmission of the data packets from the transmitter block 312 uses the network interface 226 in order to transmit the data packets to the network 106.

There is therefore shown in Figure 5 the method steps implemented at the user terminal 104 for transmitting audio data received at the microphone 212 of the user terminal 104 over the network 106 to the user terminal 114 for use in a communication session between the users 102 and 112.

The precise implementation of the encoder block 308 and the packetiser block 310 is dependent upon the type of the communication system 100. Furthermore, in some embodiments, the audio data is not encoded and/or not packetised before being transmitted from the transmitter block 312 over the network 106.

In preferred embodiments, the user terminal 114 comprises equivalent functional blocks to those of user terminal 104 shown in Figure 3a (or Figure 3b) in order for the user terminal 114 to transmit audio data over the network 106 to the user terminal 104 in the communication session.

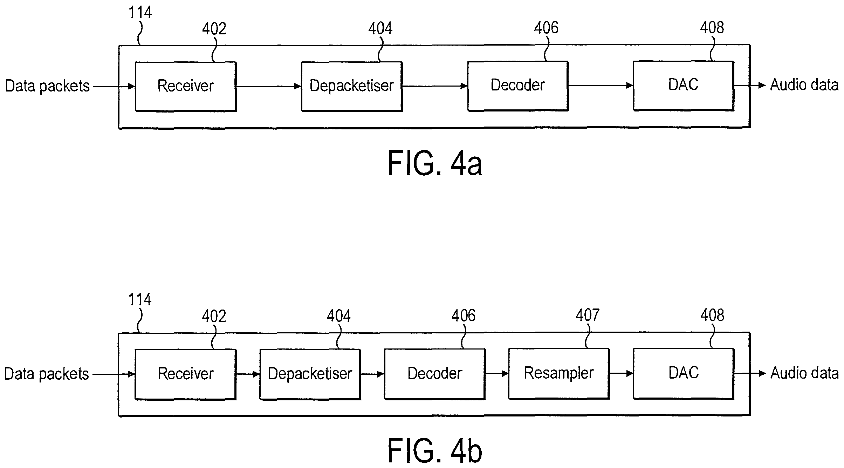

Figure 4a shows a functional block diagram of the user terminal 114 for use in receiving the data packets transmitted from the user terminal 104 according to a preferred embodiment. The user terminal 114 comprises a receiver block 402 configured to receive the data packets from the network 106. The user terminal 114 also comprises a depacketiser block 404, a decoder block 406 and a digital to analogue converter block 408. An output of the receiver block 402 is coupled to an input of the depacketiser block 404. An output of the depacketiser block 404 is coupled to an input of the decoder block 406. An output of the decoder block 406 is coupled to an input of the digital to analogue converter block 408.

In operation, the data packets comprising audio data are received at the receiver block 402 from the user terminal 104 via the network 106. The received data packets are passed from the receiver block to the depacketiser block 404. The depacketiser block 404 depacketises the data packets to retrieve the encoded audio data from the data packets. The encoded audio data is passed to the decoder block 406 which decodes the encoded audio data. The output of the decoder block 406 is a digital representation of the audio data which is input into the digital to analogue converter block 408. The digital to analogue converter block 408 converts the digital audio data into analogue form. The analogue audio data is then output from the digital to analogue converter block 408 and played out of the user terminal 114 to the user 112, e.g. using speakers of the user terminal 114.

A skilled person would be aware of the precise implementation details of the functional blocks 402 to 408, and may make variations in those implementation details. The digital to analogue converter (DAC) block 408 is implemented in hardware. However, the functional blocks 402 to 406 shown in Figure 4a may be implemented in software for execution on a CPU at the user terminal 114, in hardware at the user terminal 114 or in firmware at the user terminal 114. This is an implementation choice for a skilled person when putting embodiments of the invention into effect. Furthermore, in some embodiments, some or all, of the functional blocks 402 to 408 are implemented in an audio codec at the user terminal 114.

In another embodiment, as shown in figure 4b, there is an additional module in between the decoder block 406 and the DAC block 408, namely a resampler block 407. The resampler block 407 may be a separate block to the decoder block 406, or may be implemented as part of the decoder block 406. The resampler block 407 converts the sampling rate of the audio signal, and is typically implemented in software but may be implemented in hardware.

In preferred embodiments, the user terminal 104 comprises equivalent functional blocks to those of user terminal 114 shown in Figure 4a (or in Figure 4b) in order for the user terminal 104 to receive audio data from the user terminal 114 over the network 106 in the communication session.

During a communication session, the method steps shown in Figure 6 are implemented at the user terminal 104 (and may also be implemented at the user terminal 114) for dynamically adjusting the sampling frequency during the communication session.

In step S602 a communication session is initiated between the users 102 and 112, using their respective user terminals 104 and 114 to communicate over the network 106. Audio data is sampled and transmitted from the user terminal 104 to the user terminal 114 (and vice versa) according to the method steps shown in Figure 5 and described above.

As described above, when the communication session is initiated the sampling frequency (of the ADC block 302 and/or the adjustment to the sampling frequency introduced by a resampler block 307 in the user terminal 104) is set. For example the audio codec may be initialized when the communication session is initialized, and on initialization of the codec the sampling frequency is set. The sampling frequency may be set according to an estimation of the available CPU resources at the user terminal 104 at the time of initializing the codec. The communication session proceeds and the audio data received at the user terminal 104 is sampled using the sampling frequency which has been set. As described below, the sampling frequency can be set, and then later adjusted dynamically based on available CPU resources.

During the communication session, at some point after the initialization of the communication session, the CPU resources available at the user terminal 104 are estimated again in step S604. In step S606, based on the estimated processing resources available at the first user terminal 104, the sampling frequency is dynamically adjusted during the communication session. This allows the sampling frequency to be altered in response to changes in the CPU resources available at the user terminal 104. The value of the sampling frequency may be adjusted in step S606 based on the latest estimate of the available CPU resources, as estimated in step S604. The sampling frequency can be dynamically adjusted, meaning that the sampling frequency can be adjusted during the communication session. The value of the adjusted sampling frequency is based on the most recent estimate of the available CPU resources. This allows the sampling frequency to be optimized to the current CPU resources available at the user terminal 104. As described above, the sampling frequency of the audio data can be adjusted by adjusting the sampler block 304 and/or the resampler block 307 in the user terminal 104.

The adjustment of the sampling frequency applied by the resampler block 307 can be adjusted in a similar way in which the sampling frequency used by the sampler block 304 is adjusted. The adjustment of the sampling frequency applied by the resampler block 307 may be in addition or as an alternative to the adjustment of the sampling frequency used by the sampler block 304. For example, the sampling frequency of the ADC block 302 can be kept constant and instead the output sampling frequency of the resampler block 307 is adapted. Adjusting the sampling frequency of the resampler block 307 by adjusting the resampling ratio used therein may be less likely to cause glitches in the audio stream than adjusting the sampling frequency of the sampler block 304 of the ADC 302. It can therefore be beneficial to adjust the sampling frequency of the resampler block 307 rather than that of the sampler block 304, in particular because the adjustment is performed dynamically during a communication session.

The sampling frequency of the codec is set at the encoder side. In other words, the encoding process is done at a certain sampling rate, and the decoder decodes a signal with the same sampling frequency. Therefore, if the decoder side wishes to change the sampling frequency (e.g. in response to a determination of the available CPU resources at the decoder side), it will need to communicate this adjustment to the encoder. The same is true for a server in the network: when the server wishes to change the sampling frequency (in response to a determination of the available CPU resources at the server), it will need to communicate this adjustment to the encoder. In order to communicate the adjustment to the sending user terminal, the receiving user terminal (or a server involved in the communication session) can send a sample frequency adjustment request to the sending user terminal. In response the sending user terminal can dynamically adjust the sampling frequency of the audio data which is transmitted in the communication session. In this way, the sampling frequency used at the sending user terminal can be dynamically adjusted based on the CPU resources available at the receiving user terminal, or available at a network server involved in processing the audio data in the communication session (e.g. by routing the audio data to the receiving user terminal). For the sending user terminal 104 it's simpler: it can adjust the sampling rate locally and the decoder will recognize that it receives data encoded at a different sampling rate and adjust for that by either resampling the signal or adjusting the DAC's sampling frequency.

In step S608 it is determined whether the communication session has ended. If the communication session has ended then the method ends in step S610. However, if it is determined in step S608 that the communication session has not ended then the method passes back to step S604 in order for the available CPU resources to be estimated again.

In this way, during the communication session (i.e. from initiation of the communication session until the communication session ending) steps S604 and S606 of estimating the available CPU resources and adjusting the sampling frequency are performed repeatedly. To give examples, steps S604 and S606 may be performed one time per minute, one time per second or one hundred times per second. Steps S604 and S606 may be performed effectively continuously (that is to say with a frequency which is high enough that the latest estimate of the CPU resources available at the user terminal 104 is an accurate estimate of the current CPU resources available at the user terminal 104 throughout the communication session). Preferably, the sampling frequency is adjusted in step S606 based on the most up to date estimate of the available CPU resources estimated in step S604.

The method steps 602 to 610 shown in Figure 6 may be implemented in software for execution on the CPU 202 at the user terminal 104, in hardware at the user terminal 104 or in firmware at the user terminal 104. This is an implementation choice for a skilled person when putting embodiments of the invention into effect.

Sometimes multiple processes that compete for CPU resources at the user terminal 104 are all in control of one application. For example, a call may start as an audio call, i.e. with only audio data being transmitted, and then during the call the call may become a video call in which audio data and video data are transmitted over the network 106. The user terminal 104 has an audio codec as described above for processing the audio data for the call and has a video codec for processing the video data for the call. The CPU resources consumed by the video and audio codecs can be dynamically adjusted to fit within the available CPU resources. For example, the CPU resources consumed by the audio codec can be adjusted by dynamically adjusting the sampling frequency of the sampled audio data based as described above. The CPU resources consumed by the video codec can be adjusted as is known in the art, e.g. by adjusting the resolution or the frame rate of the video data. In one embodiment the application for the communication session adjusts the sampling frequency of the audio codec such that some measure or estimate of user experience for the entire (audio and video) call is optimized.

More broadly, a plurality of processes (e.g. the audio and video processing processes described above) can be executed at the user terminal 104 during the communication session. A combined measure of the user's experience of the executed processes can be determined, and the sampling frequency can be dynamically adjusted based on the determined combined measure.

Another example of multiple processes competing for CPU resources at the user terminal 104 is when the user terminal 104 is hosting a conference call over the communication system 100. The host of a conference call may also be a network server. As host of the conference, the user terminal 104 will decode the incoming audio streams from all participants in the conference call (e.g. user 112 and other users in the communication system 100 not shown in Figure 1), mix them together, and encode multiple outgoing streams. As an example, an outgoing stream that is sent to the user terminal 114 comprises sampled audio data from each of the participants in the conference call except the user 112 of the user terminal 114. Without adjusting the sampling frequency, the CPU load required to handle all these steps will increase with the number of participants in the conference call. Therefore, in one embodiment, the sampling frequency is dynamically adjusted based on the number of participants in the conference call. When the number of participants grows so high that insufficient CPU resources are available, the application reduces the sampling frequency of some or all audio streams without interrupting the call. Conversely, when the number of participants drops and the CPU is sufficiently underutilized, the application increases the sampling frequency of some or all audio streams without interrupting the call. For the outgoing streams, where the application is the encoder, it is simple for the encoder to adjust the sampling frequency of the audio data which is transmitted in the communication session. For the incoming streams, where the application is the decoder, the sampling rate adjustment is done by signalling the encoding side by sending sample frequency adjustment requests to the sending user terminal as described above.

The available CPU resources mentioned above are processing resources available for processing the audio data in a communication session. In this sense the available processing resources may include resources available for receiving, sampling, encoding, packetizing and transmitting the audio data, e.g. at the user terminal 104 as described above. The processing resources may also include resources available for receiving, depacketizing, decoding and outputting audio data, e.g. at the user terminal 114 as described above. The available processing resources may also include resources available for receiving and forwarding data packets comprising the audio data at a routing node in the network 106, e.g. in the transmission path between the user terminal 104 and the user terminal 114. Indeed in a broad sense, the available CPU resources include any resources available for performing any processing on the audio data in the communication session between the user terminal 104 and the user terminal 114. The available CPU resources will depend upon other competing processes running on the user terminal 104 (or on another node at which the available processing resources are estimated, e.g. the user terminal 114 or another node in the communication system involved in processing the audio data in the communication session). A person skilled in the art would be aware of a suitable method, or methods, for performing the estimation of the available processing resources, which may, for example, involve determining the total processing resources available at a user terminal and the processing resources used by other processes at the user terminal. The precise details of the estimation of the available CPU resources, being known in the art, are not further described herein.

In some embodiments, the audio data is not sampled at the user terminal 104 from an analogue audio signal during the communication session. For example, the audio data may be retrieved from an audio data file rather than being sampled by the sampler block 304 during the communication session. For example, an audio data file may be stored in the memory 224 (or another memory) of the first user terminal 104. The user 102 may decide that the audio data from the audio data file is to be transmitted to the user terminal 114 in the communication session. Therefore, the audio data file is accessed from the memory 224 to retrieve the digital samples of audio data for transmission to the user terminal 114. The digital audio samples may be input into the resampler block 307 shown in Figure 3b. In this way, the sampling frequency of the audio samples can be dynamically adjusted during the communication session by adjusting the resampling ratio used by the resampler block 307. Therefore, the sampling frequency of the audio data retrieved from an audio file can be dynamically adjusted during a communication session. The audio data retrieved from an audio file may be, for example, music, an audio book or a voice mail. Other types of audio data may also be retrieved from an audio file stored at the user terminal 104 (e.g. in the memory 224) as would be apparent to a person skilled in the art. After the audio data has passed through the resampler block 307, the samples of audio data can be encoded and packetized (e.g. in the encoder block 308 and the packetiser block 310) and then transmitted from the transmitter block 312 to the user terminal 114. In this way, the audio data samples can be streamed to the user terminal 114 in the communication session for output at the user terminal 114 in real-time in the communication session. This is in contrast to downloading an audio data file, such as an MP3 file, whereby the data of the file is downloaded such that the file can, at some subsequent point in time, be converted into audio samples representing an analogue audio signal for output. When downloading an audio file for subsequent playback there is no streaming of samples of audio data and no adjustment of a sampling frequency at the transmitting side.

Some applications or codecs can dynamically (i.e., during a call) adjust the sampling frequency based on the available network bandwidth. Lowering the sampling frequency reduces the bitrate of the codec, therefore dynamically adjusting the sampling frequency provides a mechanism to prevent exceeding the network bandwidth. However, this is not the same mechanism as that described above in which the sampling frequency is dynamically adjusted based on the available CPU resources at the user terminal. An aim of the mechanism described above is to dynamically optimize the sampling frequency of the audio codec in dependence on the available CPU resources, such that the sampling frequency is high enough to provide good quality sampled audio data without being so high as to cause CPU overload at the user terminal 104. In some embodiments, the sampling frequency is dynamically adapted based on a determination of the available network bandwidth, as well as on the estimated CPU resources available at the user terminal 104.

The communication system 100 shown in figure 1 and described above uses communication clients to communicate over the network 106. However, the invention could also be implemented in a different system for communicating over a network provided that audio data is sampled for transmission between two user terminals in a communication session.

The method steps described above could be implemented with a computer program product comprising computer readable instructions for execution by the CPU 202 at the user terminal 104. Execution of the computer readable instructions at the user terminal 104 may cause the methods steps described above to be carried out.

While this invention has been particularly shown and described with reference to preferred embodiments, it will be understood to those skilled in the art that various changes in form and detail may be made without departing from the scope of the invention as defined by the appendant claims.

## Claims

1. A user terminal (104) for processing audio data for transmission over a network (106) in a communication session between the user terminal and a second user terminal (114), the user terminal comprising:
transmitting means (312) for transmitting samples of audio data which have a sampling frequency and which provide a digital representation of an analogue audio signal to the second user terminal in the communication session;
**characterized in that** the user terminal comprises;
determining means for repeatedly determining, during the communication session, an estimate of current central processing unit (CPU) resources available for processing audio data in the communication session; and
adjusting means (307) for dynamically adjusting the sampling frequency of audio data during the communication session based on the determined estimate of available CPU resources.

2. A method of processing audio data for transmission over a network (106) in a communication session between a first user terminal (104) and a second user terminal (114), the method comprising:
transmitting (S510) samples of audio data which have a sampling frequency and which provide a digital representation of an analogue audio signal from the first user terminal to the second user terminal in the communication session;
**characterized in that** the method comprises;
during the communication session, repeatedly determining (S604) an estimate of current central processing unit (CPU) resources available for processing audio data in the communication session; and
dynamically adjusting (S608) the sampling frequency of audio data during the communication session based on the determined estimate of available CPU resources.

3. The method of claim 2 or user terminal of claim 1 further comprising sampling (S502) the analogue audio signal at the first user terminal during the communication session to thereby generate said samples of audio data for transmission to the second user terminal.

4. The method or user terminal of claim 3 wherein said sampling the analogue audio signal comprises sampling the analogue audio signal at the sampling frequency; or
sampling the analogue audio signal at an initial sampling frequency to generate intermediate samples of audio data having the initial sampling frequency, and resampling the intermediate samples of audio data, thereby applying an adjustment to the initial sampling frequency of the audio data to thereby generate said samples of audio data at the sampling frequency.

5. The method or user terminal of claim 4 wherein said dynamically adjusting the sampling frequency comprises at least one of:
adjusting the frequency at which the analogue audio signal is sampled;
adjusting the initial sampling frequency at which the analogue audio signal is sampled; and
adjusting the adjustment applied in the resampling step.

6. The method of any of claims 2 to 5 wherein said processing resources comprise processing resources at the first user terminal and/or said processing resources comprise processing resources at a node, other than the first user terminal, which processes audio data in the communication session, and wherein said step of determining an estimate comprises receiving, at the first user terminal from the node, a sample frequency adjustment request based on an estimation of the processing resources available at the node, wherein optionally the node is the second user terminal or a network server.

7. The method of any of claims 2 to 6 wherein said step of dynamically adjusting the sampling frequency comprises:
increasing the sampling frequency when the determined estimate of available processing resources increases; and
decreasing the sampling frequency when the determined estimate of available processing resources decreases.

8. The method of any of claims 2 to 7 wherein the communication session is a conference call between a plurality of participants including users of the first and second user terminals, and wherein the conference call is hosted at the first user terminal, the method comprising:
receiving audio data at the first user terminal from each of the participants in the conference call,
wherein said samples of audio data comprise audio data received from each of the participants in the conference call except the user of the second user terminal, wherein optionally said step of dynamically adjusting the sampling frequency is based on the number of participants in the conference call, and wherein said step of dynamically adjusting the sampling frequency optionally comprises:
increasing the sampling frequency when the number of participants in the conference call decreases; and
decreasing the sampling frequency when the number of participants in the conference call increases.

9. A computer program product comprising computer readable instructions for execution by computer processing means at a first user terminal (104) for processing audio data for transmission over a network (106) in a communication session between the first user terminal and a second user terminal (114), the instructions comprising instructions for:
transmitting (S510) samples of audio data which have a sampling frequency and which provide a digital representation of an analogue audio signal from the first user terminal to the second user terminal in the communication session;
**characterized in that** the instructions comprise;
during the communication session, repeatedly determining (S604) an estimate of current central processing unit (CPU) resources available for processing audio data in the communication session; and
dynamically adjusting (S608) the sampling frequency of audio data during the communication session based on said determined estimate of available CPU resources.

## Patentansprüche

1. Benutzerendgerät (104) zum Verarbeiten von Audiodaten zur Übertragung über ein Netzwerk (106) in einer Kommunikationssitzung zwischen dem Benutzerendgerät und einem zweiten Benutzerendgerät (114), wobei das Benutzerendgerät Folgendes umfasst:
Übertragungsmittel (312) zum Übertragen von Abtastwerten von Audiodaten, die eine Abtastfrequenz aufweisen und die eine digitale Darstellung eines analogen Audiosignals bereitstellen, an das zweite Benutzerendgerät in der Kommunikationssitzung;
**dadurch gekennzeichnet, dass** das Benutzerendgerät Folgendes umfasst:
Bestimmungsmittel zum wiederholten Bestimmen eines Schätzwerts von aktuellen Zentralprozessorressourcen (CPU-Ressourcen), die zum Verarbeiten von Audiodaten in der Kommunikationssitzung verfügbar sind, während der Kommunikationssitzung und
Justierungsmittel (307) zum dynamischen Justieren der Abtastfrequenz von Audiodaten während der Kommunikationssitzung auf der Basis des bestimmten Schätzwerts von verfügbaren CPU-Ressourcen.

2. Verfahren zum Verarbeiten von Audiodaten zur Übertragung über ein Netzwerk (106) in einer Kommunikationssitzung zwischen einem ersten Benutzerendgerät (104) und einem zweiten Benutzerendgerät (114), wobei das Verfahren Folgendes umfasst:
Übertragen (S510) von Abtastwerten von Audiodaten, die eine Abtastfrequenz aufweisen und die eine digitale Darstellung eines analogen Audiosignals bereitstellen, von dem ersten Benutzerendgerät an das zweite Benutzerendgerät in der Kommunikationssitzung;
**dadurch gekennzeichnet, dass** das Verfahren Folgendes umfasst:
wiederholtes Bestimmen (S604) eines Schätzwerts von aktuellen Zentralprozessorressourcen (CPU-Ressourcen), die zum Verarbeiten von Audiodaten in der Kommunikationssitzung verfügbar sind, während der Kommunikationssitzung und
dynamisches Justieren (S608) der Abtastfrequenz von Audiodaten während der Kommunikationssitzung auf der Basis des bestimmten Schätzwerts von verfügbaren CPU-Ressourcen.

3. Verfahren nach Anspruch 2 oder Benutzerendgerät nach Anspruch 1, das weiterhin das Abtasten (S502) des analogen Audiosignals an dem ersten Benutzerendgerät während der Kommunikationssitzung umfasst, um dadurch die Audiodatenabtastwerte zur Übertragung an das zweite Benutzerendgerät zu erzeugen.

4. Verfahren oder Benutzerendgerät nach Anspruch 3, wobei das Abtasten des analogen Audiosignals das Abtasten des analogen Audiosignals bei der Abtastfrequenz oder
das Abtasten des analogen Audiosignals bei einer anfänglichen Abtastfrequenz, um Zwischenabtastwerte von Audiodaten mit der anfänglichen Abtastfrequenz zu erzeugen, und das erneute Abtasten der Zwischenabtastwerte von Audiodaten umfasst, wodurch eine Justierung auf die anfängliche Abtastfrequenz der Audiodaten angewendet wird, um dadurch die Abtastwerte von Audiodaten bei der Abtastfrequenz zu erzeugen.

5. Verfahren oder Benutzerendgerät nach Anspruch 4, wobei das dynamische Justieren der Abtastfrequenz mindestens eines der folgenden umfasst:
Justieren der Frequenz, bei der das analoge Audiosignal abgetastet wird;
Justieren der anfänglichen Abtastfrequenz, bei der das analoge Audiosignal abgetastet wird; und
Justieren der in dem Schritt des erneuten Abtastens angewendeten Justierung.

6. Verfahren nach einem der Ansprüche 2 bis 5, wobei die Verarbeitungsressourcen Verarbeitungsressourcen an dem ersten Benutzerendgerät umfassen und/oder die Verarbeitungsressourcen Verarbeitungsressourcen an einem Knoten, bei dem es sich nicht um das erste Benutzerendgerät handelt, das Audiodaten in der Kommunikationssitzung verarbeitet, umfassen, und wobei der Schritt des Bestimmens eines Schätzwerts das Empfangen einer Abtastfrequenzjustierungsanforderung auf der Basis einer Schätzung der an dem Knoten verfügbaren Verarbeitungsressourcen an dem ersten Benutzerendgerät von dem Knoten umfasst, wobei gegebenenfalls der Knoten das zweite Benutzerendgerät oder ein Netzwerkserver ist.

7. Verfahren nach einem der Ansprüche 2 bis 6, wobei der Schritt des dynamischen Justierens der Abtastfrequenz Folgendes umfasst:
Erhöhen der Abtastfrequenz, wenn der bestimmte Schätzwert von verfügbaren Verarbeitungsressourcen zunimmt; und
Senken der Abtastfrequenz, wenn der bestimmte Schätzwert von verfügbaren Verarbeitungsressourcen abnimmt.

8. Verfahren nach einem der Ansprüche 2 bis 7, wobei die Kommunikationssitzung ein Konferenzgespräch zwischen mehreren Teilnehmern ist, die Benutzer des ersten und des zweiten Benutzerendgeräts beinhalten, und wobei das Konferenzgespräch an dem ersten Benutzerendgerät gehostet wird, wobei das Verfahren Folgendes umfasst:
Empfangen von Audiodaten an dem ersten Benutzerendgerät von jedem der Teilnehmer an dem Konferenzgespräch,
wobei die Abtastwerte von Audiodaten Audiodaten umfassen, die von jedem der Teilnehmer an dem Konferenzgespräch außer dem Benutzer des zweiten Benutzerendgeräts empfangen werden, wobei gegebenenfalls der Schritt des dynamischen Justierens der Abtastfrequenz auf der Anzahl von Teilnehmern an dem Konferenzgespräch basiert und wobei der Schritt des dynamischen Justierens der Abtastfrequenz gegebenenfalls Folgendes umfasst:
Erhöhen der Abtastfrequenz, wenn die Anzahl von Teilnehmern an dem Konferenzgespräch abnimmt; und
Senken der Abtastfrequenz, wenn die Anzahl von Teilnehmern an dem Konferenzgespräch zunimmt.

9. Computerprogrammprodukt, das computerlesbare Befehle zur Ausführung durch Computerverarbeitungsmittel an einem ersten Benutzerendgerät (104) zum Verarbeiten von Audiodaten zur Übertragung über ein Netzwerk (106) in einer Kommunikationssitzung zwischen dem ersten Benutzerendgerät und einem zweiten Benutzerendgerät (114), wobei die Befehle Befehle für Folgendes umfassen:
Übertragen (S510) von Abtastwerten von Audiodaten, die eine Abtastfrequenz aufweisen und die eine digitale Darstellung eines analogen Audiosignals bereitstellen, von dem ersten Benutzerendgerät an das zweite Benutzerendgerät in der Kommunikationssitzung;
**dadurch gekennzeichnet, dass** die Befehle Folgendes umfassen:
wiederholtes Bestimmen (S604) eines Schätzwerts von aktuellen Zentralprozessorressourcen (CPU-Ressourcen), die zum Verarbeiten von Audiodaten in der Kommunikationssitzung verfügbar sind, während der Kommunikationssitzung und
dynamisches Justieren (S608) der Abtastfrequenz von Audiodaten während der Kommunikationssitzung auf der Basis des bestimmten Schätzwerts von verfügbaren CPU-Ressourcen.

## Revendications

1. Terminal d'utilisateur (104) destiné à traiter des données audio à transmettre sur un réseau (106) au cours d'une session de communication entre le terminal d'utilisateur et un deuxième terminal d'utilisateur (114), le terminal d'utilisateur comprenant :
un moyen de transmission (312) pour transmettre des échantillons de données audio, ayant une fréquence d'échantillonnage, qui fournissent une représentation numérique d'un signal audio analogique au deuxième terminal d'utilisateur lors de la session de communication ;
**caractérisé en ce que** le terminal utilisateur comprend :
un moyen de détermination pour déterminer à plusieurs reprises, au cours de la session de communication, une estimation de la disponibilité des ressources du processeur central actuel (CPU) pour pouvoir traiter les données audio lors de la session de communication ; et
un moyen de réglage (307) pour régler dynamiquement la fréquence d'échantillonnage des données audio au cours de la session de communication, en fonction de l'estimation déterminée de la disponibilité des ressources du CPU.

2. Procédé pour traiter des données audio aux fins de transmission sur un réseau (106) au cours d'une session de communication entre un premier terminal d'utilisateur (104) et un deuxième terminal d'utilisateur (114), le procédé consistant à :
transmettre (S510) des échantillons de données audio, ayant une fréquence d'échantillonnage, qui fournissent une représentation numérique d'un signal audio analogique en provenance du premier terminal d'utilisateur au deuxième terminal d'utilisateur lors de la session de communication ;
**caractérisé en ce que** le procédé consiste à :
au cours de la session de communication, déterminer (S604) à plusieurs reprises une estimation de la disponibilité des ressources du processeur central actuel (CPU) pour pouvoir traiter les données audio lors de la session de la session de communication ;
régler (S608) dynamiquement la fréquence d'échantillonnage des données audio au cours de la session de communication, en fonction de l'estimation déterminée de la disponibilité des ressources du CPU.

3. Procédé selon la revendication 2 ou terminal d'utilisateur selon la revendication 1, comprenant en outre l'échantillonnage (S502) du signal audio analogique à hauteur du premier terminal d'utilisateur au cours de la session d'utilisateur pour, par là, générer desdits échantillons de données audio à transmettre au deuxième terminal d'utilisateur.

4. Procédé ou terminal d'utilisateur selon la revendication 3, dans lequel ledit échantillonnage du signal audio analogique consiste à échantillonner le signal audio analogique à la fréquence d'échantillonnage ; ou
Échantillonner le signal audio analogique à une fréquence d'échantillonnage initiale, pour générer des échantillons intermédiaires de données audio comportant la fréquence d'échantillonnage initiale, et à ré-échantillonner les échantillons intermédiaires de données audio, exerçant par là un réglage de la fréquence d'échantillonnage initiale des données audio pour ainsi générer desdits échantillons de données audio à la fréquence d'échantillonnage.

5. Procédé ou terminal d'utilisateur selon la revendication 4, dans lequel ledit réglage dynamique de la fréquence d'échantillonnage consiste à au moins :
régler la fréquence à laquelle le signal audio analogique est échantillonné ;
régler la fréquence d'échantillonnage initiale à laquelle le signal audio analogique est échantillonné ; et
régler le réglage exercée à l'étape du ré-échantillonnage.

6. Procédé selon l'une quelconque des revendications 2 à 5, dans lequel lesdites ressources de traitement comportent des ressources de traitement, à hauteur du premier terminal d'utilisateur, et/ou lesdites ressources de traitement comportent des ressources de traitement à hauteur d'un noeud, autre que le premier terminal d'utilisateur, qui traite des données audio au cours de la session de communication, et dans lequel ladite étape de détermination d'une estimation comprend la réception, à hauteur du premier terminal d'utilisateur à partir du noeud, une demande de réglage de fréquence d'échantillonnage en fonction d'une estimation de la disponibilité des ressources de traitement à hauteur du noeud, dans lequel éventuellement le noeud est le deuxième terminal d'utilisateur ou un serveur de réseau.

7. Procédé selon l'une quelconque des revendications 2 à 6, dans lequel ladite étape de réglage dynamique de la fréquence d'échantillonnage consiste à :
accroître la fréquence d'échantillonnage lorsque l'estimation déterminée de la disponibilité des ressources de traitement augmente ; et
baisser la fréquence d'échantillonnage lorsque l'estimation déterminée de la disponibilité des ressources de traitement diminue.

8. Procédé selon l'une quelconque des revendications 2 à 7, dans lequel la session de communication est une conférence téléphonique entre une pluralité de participants comprenant des utilisateurs des premier et deuxième terminaux d'utilisateur, et dans lequel la conférence téléphonique a lieu à hauteur du premier terminal d'utilisateur, le procédé consistant à :
recevoir des données audio à hauteur du premier terminal d'utilisateur en provenance de chacun des participants à la conférence téléphonique,
dans lequel lesdits échantillons de données audio comportent des données audio émises par chacun des participants à la conférence téléphonique, à l'exception de l'utilisateur du deuxième terminal d'utilisateur, dans lequel éventuellement ladite étape de réglage dynamique de la fréquence d'échantillonnage est fonction du nombre de participants à la conférence téléphonique, et dans lequel ladite étape de réglage dynamique de la fréquence d'échantillonnage consiste éventuellement à :
accroître la fréquence d'échantillonnage lorsque le nombre de participants à la conférence téléphonique diminue ; et
baisser la fréquence d'échantillonnage lorsque le nombre de participants à la conférence téléphonique augmente.

9. Produit de programme d'ordinateur comprenant des instructions lisibles par ordinateur, destinées à être exécutées par un moyen de traitement informatique à hauteur d'un premier terminal d'utilisateur (104) afin de traiter les données audio à transmettre sur un réseau (106), au cours d'une session de communication entre le premier terminal d'utilisateur et un deuxième terminal d'utilisateur (114), les instructions comportant des consignes pour :
transmettre (S510) des échantillons de données audio, qui ont une fréquence d'échantillonnage, et qui fournissent une représentation numérique d'un signal audio analogique en provenance du premier terminal d'utilisateur au deuxième terminal d'utilisateur lors de la session de communication ;
**caractérisé en ce que** les instructions consistent à :
au cours de la session de communication, déterminer à plusieurs reprises (S604) une estimation de la disponibilité des ressources du processeur central actuel (CPU) pour pouvoir traiter des données audio lors de la session de communication ; et
régler (S608) dynamiquement la fréquence d'échantillonnage des données audio au cours de la session de communication, en fonction de ladite estimation déterminée de la disponibilité des ressources du CPU.
